Europäisches Patentamt

European Patent Office

Office européen des brevets

(19)

(11) Publication number: **0 056 270**
**A1**

(12)

# EUROPEAN PATENT APPLICATION

(21) Application number: 82100138.5

(51) Int. Cl.³: **H 04 N 5/60**

(22) Date of filing: **11.01.82**

(30) Priority: **14.01.81 JP 4225/81**

(71) Applicant: **MATSUSHITA ELECTRIC INDUSTRIAL CO., LTD, 1006, Oaza Kadoma Kadoma-shi, Osaka-fu, 571 (JP)**

(72) Inventor: **Sakimichi, Shigeyuki, 30-11, Ikuno, Katano-shi (JP)**
Inventor: **Iwao, Toyohiro, 12-10, Minohara-2-chome, Ibaraki-shi (JP)**
Inventor: **Nagai, Hiroyuki, 8-24, Yamatedai-6-chome, Ibaraki-shi (JP)**

(43) Date of publication of application: **21.07.82**
**Bulletin 82/29**

(74) Representative: **Patentanwälte Leinweber & Zimmermann, Rosental 7/II Aufg., D-8000 München 2 (DE)**

(84) Designated Contracting States: **DE GB NL**

(54) Aural signal demodulation apparatus for a television receiver.

(57) An apparatus for receiving and demodulating an aural multiplex signal of a television receiver is provided. $(R+L)/2$ and R signals acting as main and auxiliary aural signals are transmitted to the apparatus at reception of stereo broadcasting, and first and second aural signals acting as the main and auxiliary aural signals are transmitted at reception of dual broadcasting. A first amplifier (7) amplifies the main aural signal by switching the alternating current gain of either $2n$ or $n$ times, and a second amplifier (13) having the gain of $n$ times amplifies the auxiliary aural signal. At the reception of stereo broadcasting, the L and R aural output signals are obtained from the main aural signal amplified by $2n$ times and the auxiliary aural signal amplified by $n$ times. At the reception of dual broadcasting, first and second aural output signals are obtained from the main and auxiliary aural signals both amplified by $n$ times.

EP 0 056 270 A1

## AURAL SIGNAL DEMODULATION APPARATUS

## FOR A TELEVISION RECEIVER

This invention relates to an apparatus for receiving an aural multiplex signal of a television broadcast, and demodulating it to obtain audio outputs.

As a method of aural multiplex transmission for television, a system of transmitting (R+L)/2 and R aural signals by using two carrier waves has been proposed in the Federal Republic of Germany. In the stereo transmission of this method, the principal carrier wave (fv + 5.5 MHz: picture carrier frequency) is FM modulated by the (R+L)/2 signal, acting as a main aural signal, and the sub-carrier wave (fv + 5.742 MHz) is FM modulated by the R signal acting an auxiliary aural signal. These two carrier waves are multiplexed with the television signal. Here, the R signal is referred to as a right aural signal, and the L signal as a left aural signal. In the case of dual broadcasting (e.g. bilingual broadcasting), a first aural signal (e.g. English voice signal) is transmitted as the main aural signal and a second aural signal (e.g. German voice signal) as the auxiliary aural signal. In the case of monoral broadcasting, a monoral aural signal is transmitted as both of the main and auxiliary signals.

This invention relates to an aural signal demodulation apparatus for such aural multiplex telecasting. More particularly, it aims to provide an efficient demodulation circuit for an aural multiplex signal which is transmitted by the system with (L+R)/2 and R signals in the case of stereo broadcasting.

The invention will be explained in more detail with reference to the accompanying drawings, in which:

Fig. 1 is a circuit diagram of an aural signal demodulation apparatus for the television receiver according to one embodiment of this invention;

Figs. 2, 3 and 4 are circuit diagrams showing each operation of the above apparatus; and

Fig. 5 is a switching circuit for the above apparatus.

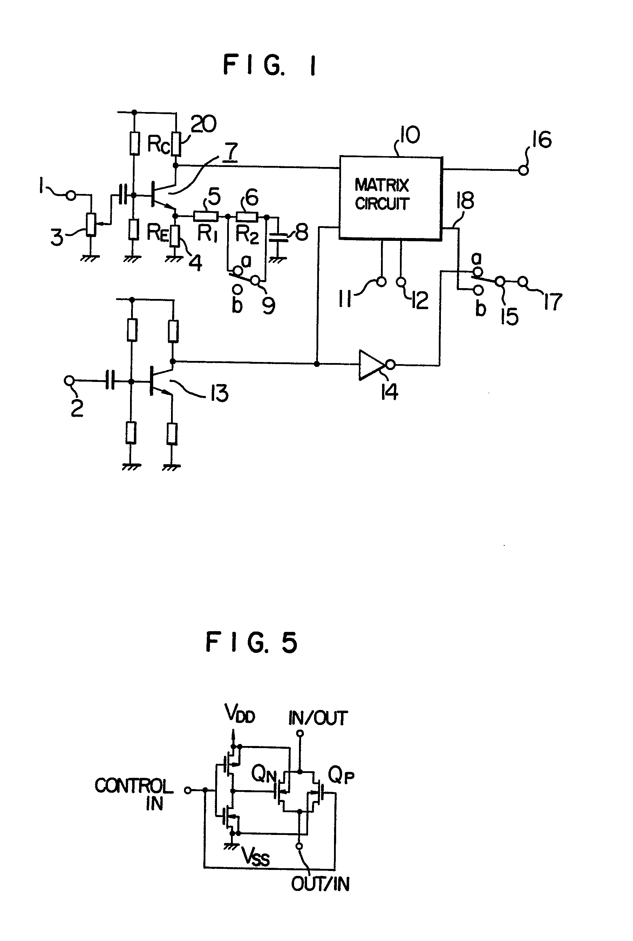

Fig. 1 shows a whole constitution in which the main aural signal from the main aural demodulation circuit (FM demodulation circuit of 5.5 MHz) is applied to an input terminal 1, and the auxiliary aural signal from the auxiliary aural demodulation circuit (FM demodulation circuit of 5.742 MHz) is applied to an input terminal 2. In the reception of stereo broadcasting, the main aural signal is the (R+L)/2 signal and the auxiliary aural signal is the R signal. In the reception of dual broadcasting, the main aural signal is the first aural signal E (e.g. English voice signal) and the auxiliary aural signal is the second aural signal G (e.g. German voice signal).

A reference numeral 3 denotes an attenuator which attenuates the input level of the main aural signal L' or the signal (L+R)/2 of the input terminal 1. Numerals 4, 5 and 6 are emitter resistors for a first amplifier 7 of emitter earth type, 8 is a capacitor, 9 is a switch for short-circuiting the resistor 6 in the case of demodulation of stereo broadcasting, 10 is a matrix circuit, 11 and 12 are control terminals, 13 is a second amplifier, 14 is a polarity inverter, 15 is a switch for selecting either a second output of the matrix circuit 10 or a signal from the polarity inverter 14, and 16 and 17 are output terminals.

Here, it is important to set the value of the emitter resistor 6 (hereinafter referred to as $R_2$) of the first amplifier 7 to be sufficiently larger than both the resistance value $R_E$ of the resistor 4 and the resistance value $R_1$ of the resistor 5. It is also important to set the impedance of the capacitor 8 sufficiently low relative to the aural signals. In the demodulation of bilingual broadcasting, the switch 9 for the amplifier 7 is switched to the b side. Therefore, the amplification factor $A_1$ is approximately given by the ratio of the collector resistor (resistance value $R_C$) to $R_E$. At demodulation of stereo broadcasting, the switch 9 is switched to the a side to short-circuit the resistor 6. Therefore, the amplification factor is given by $A_2 \doteqdot R_C/R_E + R_1)$. When $R_E$ is set to $R_1$, $A_2$ becomes $2 \cdot A_1$. The bias voltage of the collector of the amplifier 7 is not changed. Namely, the gain of the amplifier at the stereo reception becomes twice as large as that at the bilingual reception. Thus, an amplifier free from such shock noise as caused by the bias variation is realized. Further, it is important to set the gain

$A_3$ of the amplifier 13 for the auxiliary aural signal to

be $A_3 \lesssim A_1$. Although it is desirable that the two aural signals introduced into the input terminals 1 and 2, respectively have the same level, they are frequently not equal in a usual electronic circuit due to the variation in circuit components. However, such a variation can be absolutely cancelled with aid of the attenuator 3 and the amplifier set to $A_3 \lesssim A_1$. Therefore, the input

levels at the matrix circuit 10 are made equal to each other. Assuming now that the gain $A_3$ of the amplifier

13 is n, the gain $A_1$ of the amplifier 7 is expressed

as $A_1 \gtrsim n$ and the gain $A_2$ ($\doteqdot 2A_1$) at the stereo reception

is expressed as $A_2 \gtrsim 2n$.

The matrix circuit 10 has two input terminals and two output terminals. The main aural signal is applied to the first input terminal and the auxiliary aural signal is applied to the second input terminal.

At the demodulation of bilingual broadcasting, a control signal is applied to the first control input terminal 11 of the matrix circuit 10. The main aural signal at the output terminal of the first amplifier circuit 7 appears at the first output terminal 16 of the matrix circuit 10, and the auxiliary aural signal at the output terminal of the second amplifier circuit 13 appears at the second output terminal 18. In the reception of stereo broadcasting, the control signal is

- 5 -

0056270

applied to the second control input terminal 12. Then, the L signal appears at the first output terminal 16. At the reception of monoral broadcasting in which, no control signal is applied to the control input terminals 11 and 12, the signal at the first input-terminal appears at both output terminals 16 and 18. The switching circuit 15 controls the second input signal of the matrix circuit 10 inverted by the inverter circuit 14 and the signal at the second output terminal 18 of the matrix circuit 10 in such a manner that both signals are switched to the side b at the bilingual broadcasting and to the side a at the stereo broadcasting. With the constitution, the main and auxiliary aural signals give principal and sub-audio outputs at the bilingual reception and L and R audio outputs at the stereo reception. If desired, one of the signals at both output terminals 16 and 17 may be selected, that is only the main audio signal or only the monoral (L+R) audio signal may be selected.

In the above-mentioned switching operation of the aural signals, it should be noted that the switching circuits 9 and 15 work in gang with the control signals given to the terminals 11 and 12. Namely, in the absence of control input signals at the terminals 11 and 12, or in the presence of a control input signal at the first control terminal 11 (at bilingual demodulation), the switches 9 and 15 are connected to the b side. In the presence of a control signal at the second control terminal 12 (at stereo demodulation), they are connected to the a side. The afore-mentioned demodulation procedure is executed only by this connection.

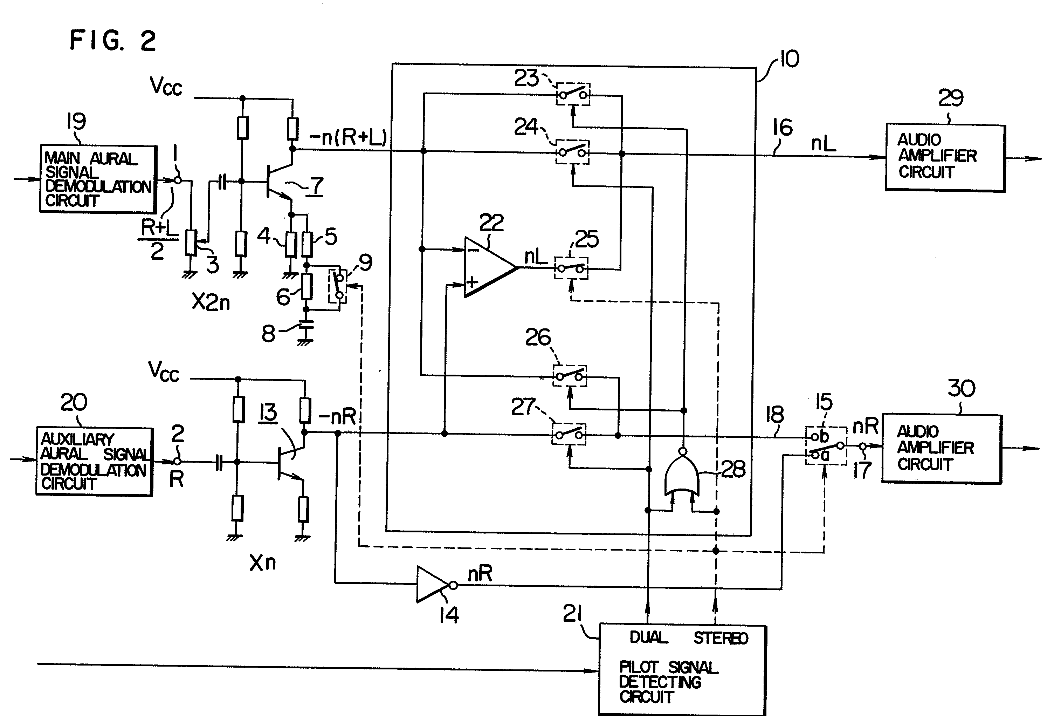

Figs. 2 to 4 show circuit operation at the reception of stereo, dual and monoral broadcastings, respectively. A reference numeral 19 denotes an FM demodulator circuit for the main aural signal of 5.5 MHz; 20 denotes an FM demodulator circuit for the auxiliary aural signal of 5.742 MHz; and 21 denotes a pilot signal detection circuit which detects a pilot signal transmitted by the stereo or bilingual broadcasting, and generates control signals at the reception of stereo or dual signal. Numeral 22 is a subtraction circuit which forms a difference signal from the output signals of the first and second amplifier circuits 7 and 13 and generates an L audio signal with $-nR-\{-n(R+L)\} = nL$ at the reception of stereo broadcasting. Numerals 23 to 27 are switching circuits provided in the matrix circuit 10. Each switch circuit may be formed by an analog switching circuit, as shown in Fig. 5, which becomes conductive between the input and the output terminals when a control input is made high.

Fig. 2 shows the operation of the reception of stereo broadcasting. In this case, the main aural signal is the $\frac{R+L}{2}$ signal and the auxiliary aural signal is the R signal. The switching circuits 9 and 25 are made conductive and the switching circuit 15 is connected to the a side by a stereo control signal. The other switching circuits are open. Therefore, the amplification factor of the first amplification circuit 7 becomes 2n and hence the output thereof gives a signal with -n(R+L). The output of the second amplification circuit 13 becomes -nR signal. The subtraction circuit 22 gives an output signal of nL. This signal is passed through the switching circuit 25 toward the output terminal 16 and supplied to an audio amplifier circuit 29 where the left side voice is reproduced. The inverter circuit 14 gives a signal of nR. This signal is passed through the switch 15 toward the output terminal 17 and supplied to an audio amplifier circuit 30 where the right side voice is reproduced.

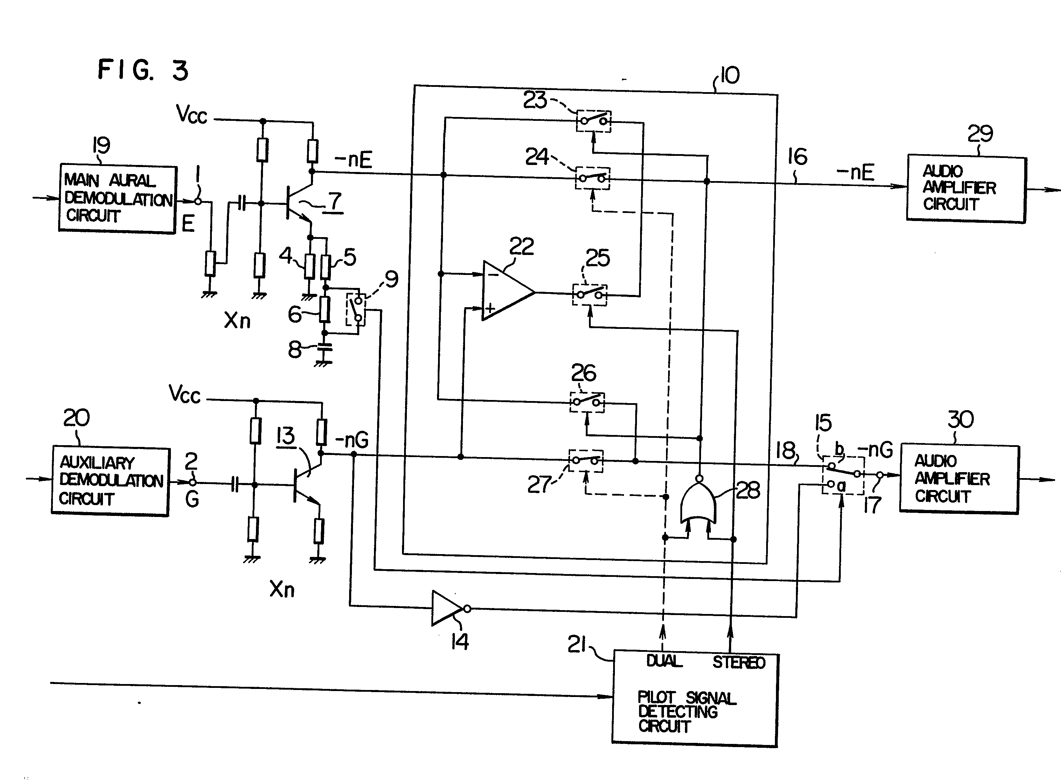

Fig. 3 shows the operation of the reception of dual broadcasting. In this case, the main aural signal is the first aural signal E and the auxiliary aural signal is the second aural signal G. The switching circuits 24 and 27 are made conductive, and the switching circuit 15 is connected to the b side by a dual broadcasting control signal. The other switching circuits are open. Since the switching circuit 9 is made open, the amplification factor of the first amplifier circuit 7 becomes n, and hence the output thereof gives a signal with -nE. Output signals -nE and -nG of the first and second amplifier circuits 7 and 13 are passed through the switching circuits 24, 27 and 15, respectively. They are supplied to amplifier circuits 29 and 30 where the first voice (English) and the second voice (German) are reproduced.

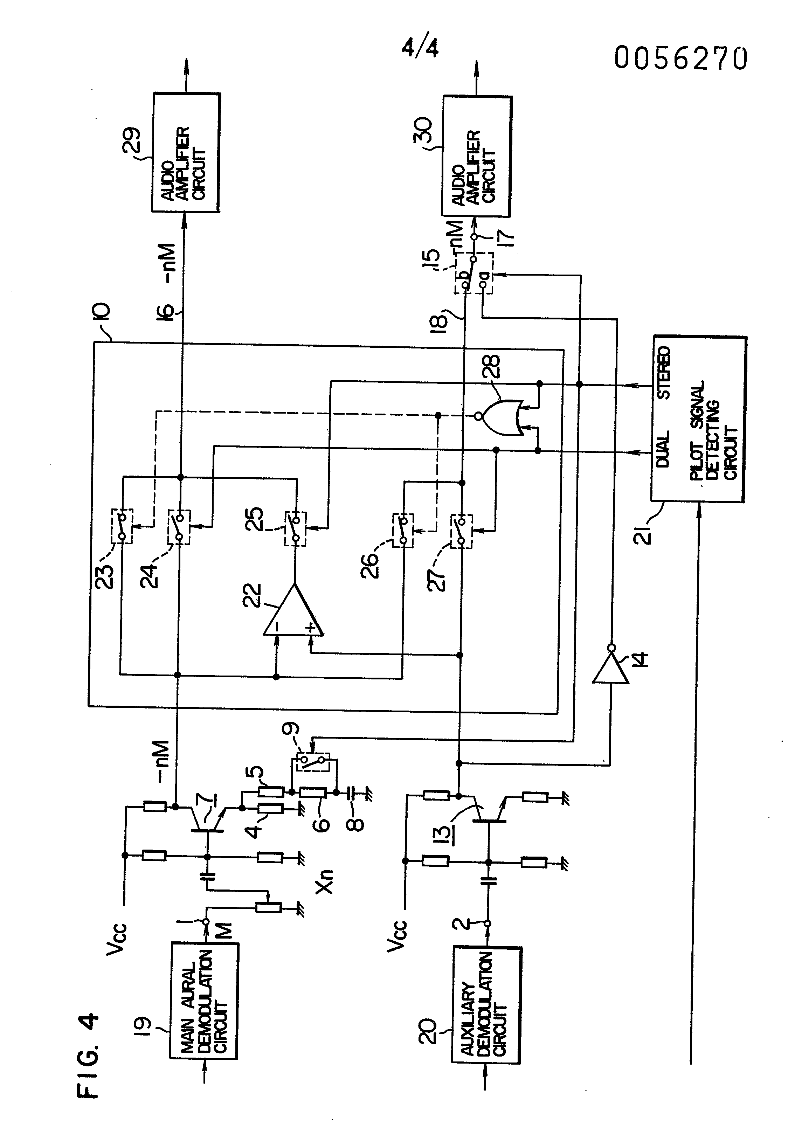

Fig. 4 shows the operation of the reception of monoral broadcasting. In this case, the main aural signal is a monoral signal M and no auxiliary aural signal exists. Since no stereo control signal and dual transmission control signal is generated, the switching circuits 23 and 26 are made conductive by the output of a NOR gate 28. The switching circuit 15 is connected to the $\underline{b}$ side and the other switching circuits are made open. Therefore, the amplification factor of the first amplification circuit 7 becomes n, and hence the output thereof becomes $-nM$. This signal is passed through the switching circuits 23, 26 and 15, and supplied to the audio amplifiers 29 and 30 where the monoral voice is reproduced.

Next, the effect of this invention will be made clearer by a concrete embodiment. In the embodiment as shown in Fig. 1, there are set the gain $A_3$ of the amplifier 13 = 2.7, $R_C$ = 6.8 k$\Omega$, $R_E$ = 1.5 k$\Omega$, $R_1$ = 1.5 k$\Omega$, $R_2$ = 68 k$\Omega$, and the capacitance of the condenser 14 = 100 μF. BN5823 (product of Mitsubishi Co., Ltd.) was used for the matrix circuit 10. The polarity inverter 14 was formed by one transistor and two resistors. Analog switches TC4016BP (product of Toshiba Co., Ltd.) were used for the switching circuits 9 and 15. The switches were made to work by a control signal. In the circuit as constructed in this manner, the amplifier 7 has the gain of $A_1 \doteqdot 4.5$ at dual transmission and the gain of $A_1 \doteqdot 9$ at stereo transmission. When the main and auxiliary aural signals of 150 mV rms were applied to the input terminals and a control signal was applied to the control input terminal 11, an output signal of 405 mV rms was obtained at the output terminal 17. At the output terminal 16, an output signal of 405 mV rms was also obtained by adjusting the attenuator 3. When the (L+R) and R signals of 150 mV rms were applied to the input terminals 1 and 2, respectively, and a control signal was applied to the control input terminal 12. the L and R signals of 405 mV rms were obtained at the output terminals 16 and 17, respectively. Furthermore, it was confirmed that no shock noise was generated at the output side even by turning on and off the control signals at the control terminals.

In the circuit shown in the Figure, the R signal is inverted by the polarity inverter 14. This inverter was provided for the purpose of adjusting the phase of the R signal to that of the L signal whose polarity is inverted after passing through the matrix circuit BN 5823. The inverter may be omitted if the phase of the L signal at stereo demodulation, is the same as that of the input signal.

As described above, if the aural signal demodulation circuit of this invention is used for demodulation of the television aural multiplex signal as transmitted by the (L+R)/2 and R signal system of stereo broadcasting, an efficient demodulation circuit can be realized. Therefore, the practical merit of this invention is very high.

WHAT IS CLAIMED IS:

1.          An apparatus for receiving and demodulating an aural multiplex signal. of a television receiver in which $(L+R)/2$ and R aural signals acting as main and auxiliary aural signals, respectively are transmitted thereto at reception of stereo broadcasting, and first and second aural signals acting as the main and auxiliary aural signals, respectively are transmitted thereto at reception of dual broadcasting characterized by comprising:

circuit means (19) for demodulating said main aural signal;

circuit means (20) for demodulating said auxiliary aural signal;

first amplifier means (7) for amplifying said main aural signal by either 2n or n times to switch an alternating current gain thereof;

second amplifier means (13) for amplifying said auxiliary aural signal by n times;

subtraction circuit means (22) for forming a difference signal from said main aural signal amplified by 2n times and said auxiliary aural signal; and

switching means (10) for changing the amplification factor of said first amplifier means in a manner that said amplification factor is changed to 2n times to produce the L signal from said subtraction circuit and the R signal from said second amplifier circuit at the
reception of stereo broadcasting, and said amplification
factor is changed to n times to produce a first aural
signal from said first amplifier means and a second aural
signal from said second amplifier means at the reception
of dual broadcasting.

2.      An apparatus according to Claim 1 characterized
in that said first  amplifier means includes an emitter
earth amplification circuit having a signal attenuator
at the input side thereof, and a switching circuit for
switching the emitter impedance of said emitter amplification circuit.

3.      An apparatus according to Claim 2 characterized
in that the switching circuit of said first . amplifier
means switches only an alternating current impedance.

4.      An apparatus according to Claim 1 characterized
in that said first  amplifier means includes a switching
circuit for switching only an alternating current gain
with a direct current level being maintained constant.

F I G. I

F I G. 5

# FIG. 2

FIG. 3

# FIG. 4

0056270

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | RUNDFUNK TECHNISCHE MITTEILUNGEN, vol. 23, no. 1, February 1979, pages 10-13, Munchen (DE) M.AIGNER et al.: "Eine neue Stereomatrizierung für den Fernsehton" *Figure 3* | 1 | H 04 N 5/60 |
| A | FUNKSCHAU, vol. 46, no. 1, January 1974, pages 11 - 14, Munchen (DE) A.ALTMANN: "Fernsehen mit zwei Tonkanälen". *Figure 3* | 1 | |

TECHNICAL FIELDS SEARCHED (Int. Cl. 3)

H 04 N 5/00
H 04 N 7/00
H 04 H 5/00

The present search report has been drawn up for all claims

| Place of search | Date of completion of the search | Examiner |
|---|---|---|
| THE HAGUE | 23-04-1982 | SIX G.E.E. |